# EUROPÄISCHE PATENTANMELDUNG

(11) **EP 1 808 583 A2**
(43) Veröffentlichungstag der Anmeldung: **18.07.2007**
(21) Anmeldenummer: 06025040.4
(22) Anmeldetag: 04.12.2006
(51) Int. Cl.: F01N 7/10, F02B 37/02

(54) **Twin-scroll Abgasturbolader**

(30) Priorität: 17.01.2006 DE 102006002130
(71) Anmelder: Bayerische Motorenwerke Aktiengesellschaft, 80809 München (DE)
(72) Erfinder: Dietsche, Andreas, 81829 München (DE); Tomaschek, Peter, 85259 Wiedenzhausen (DE); Kriese, Jens, 80933 München (DE); Brämer, Klaus, 09113 Chemnitz (DE)

(57) **Zusammenfassung**

Twin-scroll Abgasturbolader mit einer ersten und einer zweiten, benachbart zueinander angeordneten, im Bereich von einem Befestigungsflansch (1) von einem Steg (2) getrennten Abgaseinströmöffnung, wobei der Steg (2) im Bereich des Befestigungsflansches (1) eine Ausnehmung (5) aufweist.

Durch die erfindungsgemäße Ausgestaltung werden Risse im Steg bzw. Ausbrüche aus dem Steg verhindert.

## Beschreibung

Die Erfindung betrifft einen Twin-scroll Abgasturbolader mit den Merkmalen aus dem Oberbegriff des Patentanspruches 1.

Sie geht von der japanischen Offenlegungsschrift JP 63-198715 A aus. In dieser ist ein Twin-scroll Abgasturbolader, d. h. ein Abgasturbolader mit zwei Abgaseinströmöffnungen für eine sechszylindrige Brennkraftmaschine, beschrieben. Die Brennkraftmaschine weist einen Abgaskrümmer auf, der die Abgase von jeweils drei Zylindern sammelt und jeweils in eine Abgaseinströmöffnung des Twin-scroll Abgasturboladers leitet. Die beiden Ausströmöffnungen des Abgaskrümmers sowie die Abgaseinströmöffnungen des Abgasturboladers sind jeweils durch einen Steg voneinander getrennt. Diese Stege sind beim Betrieb der Brennkraftmaschine besonders hohen thermischen Belastungen ausgesetzt, die dazu führen können, dass im Stegbereich des Abgaskrümmers und/oder des Twin-scroll Abgasturboladers Risse entstehen bzw. Ausbrüche aus den Stegen erfolgen. Die Zerstörung des Turboladers ist die Folge. Um diesem Problem zu begegnen, schlägt die JP 63-198715 A vor, den Stegbereich des Abgaskrümmers mittels einer Bohrung durch den Steg mit Luft zu kühlen.

Da der Steg zwischen den Abgaseinströmöffnungen eines Twin-scroll Abgasturboladers aus strömungstechnischen und thermodynamischen Gründen möglichst dünn ausgeführt werden muss, ist eine Luftkühlung, wie sie in der JP 63-198715 A vorgeschlagen ist, für den Steg eines Twin-scroll Abgasturboladers nicht möglich.

Aufgabe der vorliegenden Erfindung ist es, eine Maßnahme aufzuzeigen, wie das das Ausbrechen von Partikeln aus dem Steg eines Twin-scroll Abgasturboladers verhindert werden kann.

Diese Aufgabe ist durch das Merkmal im kennzeichnenden Teil des Patentanspruches 1 dadurch gelöst, dass der Steg im Bereich des Befestigungsflansches eine Ausnehmung aufweist.
Auch wenn die Erfindung die Rissbildung nicht hundertprozentig verhindert, sorgt sie aber dafür, dass der Riss gezielt an einer vorbestimmten Stelle entsteht und sich nicht zur Stegwandkante hin verzweigt, wodurch Ausbrüche vermieden werden. Hierdurch ist es in vorteilhafter Weise möglich, bei höchsten Abgastemperaturen mit kostengünstigen Gusswerkstoffen auszukommen. Damit ergeben sich ganz erhebliche Kosten- und Kraftstoffverbrauchsvorteile, da ein Anfetten des Kraftstoff-/Luft-Gemisches zum Kühlen des Abgases, d. h. ein Brennkraftmaschinenbetrieb mit Kraftstoffüberschuss, entfallen kann.

Die Ausgestaltungen gemäß Patentanspruch 2 stellen zwei bevorzugte Ausführungsvarianten dar.

Die Fertigungsverfahren gemäß Patentanspruch 3 sind zwei bevorzugte Herstellungsverfahren für einen erfindungsgemäßen Twin-scroll Abgasturbolader. Unter spanabhebender Bearbeitung wird Bohren, Schleifen oder Fräsen verstanden, unter spanloser Fertigung Gießverfahren, wie z. B. Nieder- oder Hochdruckgießverfahren.

Aufgrund der Ausgestaltung gemäß Patentanspruch 4 lässt sich dieser, falls ein Riss im dem Stegbereich erfolgen sollte, gezielt in eine definierte Richtung lenken.

In den Patentansprüchen 5 und 6 sind besonders bevorzugte Größenordnungen für die erfindungsgemäße Ausnehmung angegeben.

Im Folgenden ist die Erfindung anhand eines bevorzugten Ausführungsbeispieles in einer einzigen Figur näher erläutert.

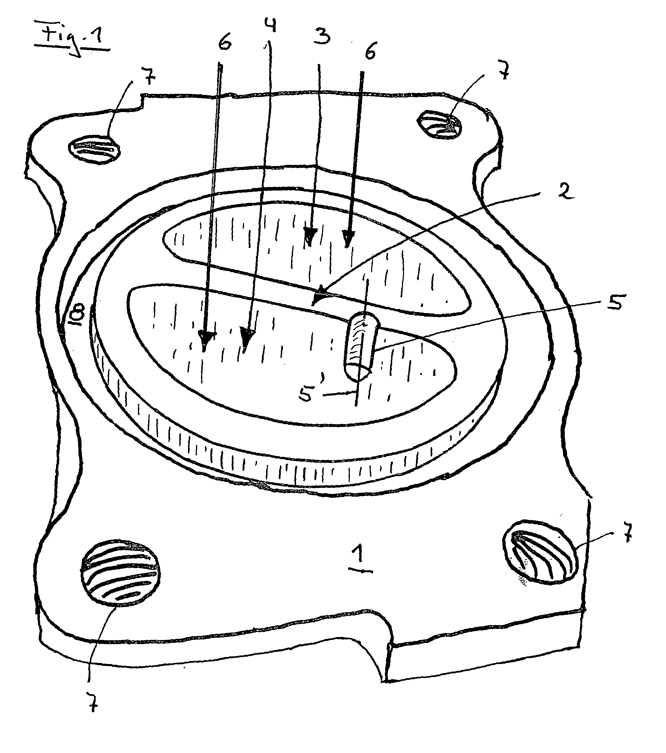

Figur 1 zeigt schematisch den Blick auf einen Befestigungsflansch 1 eines Twin-scroll Abgasturboladers. Mittig im Flansch befinden sich eine erste und eine zweite Abgaseinströmöffnung 3, 4. Die erste und die zweite Abgaseinströmöffnung 3, 4 sind durch einen Steg 2 voneinander getrennt. Radial um die Abgaseinströmöffnungen 3, 4 erstreckt sich eine Ringnut 8 zur Aufnahme eines nicht dargestellten Dichtelementes. Im Randbereich des Befestigungsflansches 1 sind vier Befestigungsbohrungen 7 zur Montage des Abgasturboladers an einen Abgaskrümmer einer Brennkraftmaschine dargestellt.

Der Steg 2 weist eine erfindungsgemäße Ausnehmung 5 auf, die sich weitgehend in Richtung einer Abgashauptströmrichtung 6, schematisch dargestellt durch zwei Pfeile, erstreckt. Die Ausnehmung 5 ist im vorliegenden Ausführungsbeispiel durch Ausfräsen, d. h. durch spanabhebende Bearbeitung erzeugt worden. In weiteren Ausführungsbeispielen kann anstelle einer Ausklinkung in einer abgasführenden Oberfläche im Flanschbereich auch eine Bohrung direkt in den Steg 2 vorgesehen werden. Die Ausnehmung 5 weist im vorliegenden Ausführungsbeispiel eine Längsachse 5' auf, die zu der Abgashauptströmrichtung 6 weitgehend parallel ausgebildet ist. In anderen Ausführungsbeispielen kann sie mit der Abgashauptströmrichtung auch einen Winkel zwischen 0 und 30° bilden. Eine typische Größe der erfindungsgemäßen Ausnehmung 5 senkrecht zur Längsachse 5' beträgt zwischen 0,1 und 5 mm und in Richtung der Längsachse 5' zwischen 0,2 und 20 mm. In diesem Größenbereich hat sich der Schutz vor dem Ausbrechen von Stegteilchen als besonders wirksam herausgestellt.

Aufgrund der erfindungsgemäßen Ausgestaltung, durch eine örtlich begrenzte Schwächung des Steges 2, wird die Rissbildung dahingehend beeinflusst, dass keine Verzweigungen entstehen, die letztlich zum Ausbrechen von Teilchen aus dem Steg 2 führen könnten. Die Schwächung des Stegquerschnitts kann beispielsweise durch eine von oben gesetzte Bohrung in den Steg 2 oder durch eine seitlich eingebrachte Einfräsung in die abgasführende Fläche des Steges erfolgen. Dies kann ein- oder beidseitig, d. h. sowohl in der ersten als auch in der zweiten Abgaseinströmöffnung 3, 4, geschehen. Die Ausnehmungen 5 können durch mechanische Bearbeitung oder gusstechnisch realisiert werden. Ein wesentlicher Vorteil der Erfindung ist, dass durch die beschriebenen Maßnahmen keine Öffnung in dem Steg 2 entsteht, die einen Gas- und Druckausgleich zwischen den beiden Abgaseinströmöffnungen 3, 4 ermöglichen würde, was zu deutlichen Wirkungsgradverlusten des Twin-scroll Abgasturboladers führen würde.

Zusammengefasst kann festgestellt werden, dass durch die Erfindung die Rissbildung im Steg 2 zwar nicht hundertprozentig verhindert ist, sie sorgt aber dafür, dass ein möglicher Riss gezielt an einer vorbestimmten Stelle entsteht und sich zur Stegwandkante hin nicht verzweigt, wodurch Ausbrüche aus dem Steg 2 und somit die Zerstörung des Twin-scroll Abgasturboladers vermieden werden. Hierdurch ist es in vorteilhafter Weise möglich, bei höchsten Abgastemperaturen mit kostengünstigen Gusswerkstoffen auszukommen. Somit ergeben sich erhebliche Kosten- und Kraftstoffverbrauchsvorteile.

### Bezugszeichenliste:

- 1.: Befestigungsflansch
- 2.: Steg
- 3.: erste Abgaseinströmöffnung
- 4.: zweite Abgaseinströmöffnung
- 5.: Ausnehmung
- 5': Längsachse
- 6.: Abgashauptströmrichtung
- 7.: Befestigungsbohrung
- 8.: Ringnut

## Patentansprüche

1. Twin-scroll Abgasturbolader mit einer ersten und einer zweiten, benachbart zueinander angeordneten, im Bereich von einem Befestigungsflansch (1) von einem Steg (2) getrennten Abgaseinströmöffnung (3, 4),
**dadurch gekennzeichnet, dass** der Steg (2) im Bereich des Befestigungsflansches (1) eine Ausnehmung (5) aufweist.

2. Twin-scroll Abgasturbolader nach Patentanspruch 1,
**dadurch gekennzeichnet, dass** die Ausnehmung (5) eine Bohrung in den Steg (2) oder eine Ausklinkung an einer abgasführenden Oberfläche ist.

3. Twin-scroll Abgasturbolader nach Patentanspruch 1 oder 2,
**dadurch gekennzeichnet, dass** die Ausnehmung (5) spanend oder spanlos gefertigt ist.

4. Twin-scroll Abgasturbolader nach einem der Patentansprüche 1 bis 3,
**dadurch gekennzeichnet, dass** eine Längsachse (5') der Ausnehmung (5) einen Winkel zwischen 0° und 30° bezüglich einer Abgashauptströmrichtung (6) bildet.

5. Twin-scroll Abgasturbolader nach einem der Patentansprüche 1 bis 4,
**dadurch gekennzeichnet, dass** die Ausnehmung (5) weitgehend senkrecht zur Längsachse (5') eine Breite zwischen 0,1 und 5 mm aufweist.

6. Twin-scroll Abgasturbolader nach einem der Patentansprüche 1 bis 5,
**dadurch gekennzeichnet, dass** die Ausnehmung (5) in Richtung der Längsachse (5') eine Länge zwischen 0,2 und 20 mm aufweist.
